# EUROPEAN PATENT APPLICATION

(11) **EP 4 417 480 A1**
(43) Date of publication of application: **21.08.2024**
(21) Application number: 24155894.9
(22) Date of filing: 06.02.2024
(51) Int. Cl.: B60W 50/14

(54) **CONTROLLER AND CONTROL METHOD**

(30) Priority: 16.02.2023 JP 2023022869
(71) Applicant: Robert Bosch GmbH, 70442 Stuttgart (DE)
(72) Inventor: Surendar, Palanisamy, 641035 Tamilnadu (IN); Tempia, Angelo, Victoria 3168 (AU); Yamada, Yasuo, Kanagawa 2248501 (JP)
(74) Representative: Isarpatent

(57) **Abstract**

The invention obtains a controller and a control method capable of improving operability of a straddle-type vehicle. In the controller and the control method according to the invention, an execution section of the controller executes rider-assistance operation to assist a rider, and a determination section of the controller further determines presence or absence of a stop or a possible stop of the straddle-type vehicle. In the case where the determination section determines the presence of the stop or the possible stop, the execution section executes setting change notification operation that is the rider-assistance operation to make a notification that suggests the rider to change setting information on the straddle-type vehicle.

## Description

### BACKGROUND OF THE INVENTION

### 1. Field of the Invention

The present invention relates to a controller and a control method capable of improving operability of a straddle-type vehicle.

### 2. Description of the Background Art

Conventionally, various techniques for assisting a rider of a straddle-type vehicle such as a motorcycle have been proposed. For example, the following driver-assistance system is disclosed in JP-A-2009-116882. The driver-assistance system warns the rider of the motorcycle that the motorcycle inappropriately approaches an obstacle present in a travel direction or substantially in the travel direction on the basis of information detected by a sensor device that detects the obstacle.

During driving of the straddle-type vehicle, the rider appropriately performs a setting operation to change setting information on the straddle-type vehicle. Here, since the straddle-type vehicle is smaller than a four-wheeled automobile and the like, a display section and an operation section that are used in the setting operation are also small. That is, the straddle-type vehicle tends to have poor operability of the setting operation. Thus, it is desired to improve operability of the straddle-type vehicle.

### SUMMARY OF THE INVENTION

The invention has been made with the above-described problem as the background and therefore obtains a controller and a control method capable of improving operability of a straddle-type vehicle.

A controller according to the invention is a controller for a rider-assistance system that assists a rider of a straddle-type vehicle, includes an execution section that executes rider-assistance operation to assist the rider, and further includes a determination section that determines presence or absence of a stop or a possible stop of the straddle-type vehicle. In the case where the determination section determines the presence of the stop or the possible stop, the execution section executes setting change notification operation that is the rider-assistance operation to make a notification that suggests the rider to change setting information on the straddle-type vehicle.

A control method according to the invention is a control method for a rider-assistance system that assists a rider of a straddle-type vehicle, includes executing rider-assistance operation by an execution section of a controller so as to assist the rider, and further includes determining presence or absence of a stop or a possible stop of the straddle-type vehicle by a determination section of the controller. In the case where the determination section determines the presence of the stop or the possible stop of the straddle-type vehicle, the execution section executes setting change notification operation that is the rider-assistance operation to make a notification that suggests the rider to change setting information on the straddle-type vehicle.

In the controller and the control method according to the invention, the execution section of the controller executes the rider-assistance operation to assist the rider, and the determination section of the controller further determines the presence or the absence of the stop or the possible stop of the straddle-type vehicle. In the case where the determination section determines the presence of the stop or the possible stop, the execution section executes the setting change notification operation that is the rider-assistance operation to make the notification that suggests the rider to change the setting information on the straddle-type vehicle. Thus, the rider can be suggested to change the setting information at timing when the straddle-type vehicle is stopped. As a result, the rider can perform a setting operation at timing when the rider can perform the setting operation at ease. Furthermore, at timing when it is difficult to perform the setting operation, unnecessary execution of the setting change notification operation, which interferes with presentation of another type of information, can be suppressed.

### BRIEF DESCRIPTION OF THE DRAWINGS

Fig. 1 is a schematic view illustrating an outline configuration of a straddle-type vehicle according to an embodiment of the invention.
Fig. 2 is a block diagram illustrating an example of a functional configuration of a controller according to the embodiment of the invention.
Fig. 3 is a flowchart illustrating an example of a first processing procedure that is executed by the controller according to the embodiment of the invention.
Fig. 4 is a flowchart illustrating an example of a second processing procedure that is executed by the controller according to the embodiment of the invention.
Fig. 5 is a flowchart illustrating an example of a third processing procedure that is executed by the controller according to the embodiment of the invention.

### DETAILED DESCRIPTION OF THE INVENTION

A description will hereinafter be made on a controller and a control method according to the invention with reference to the drawings.

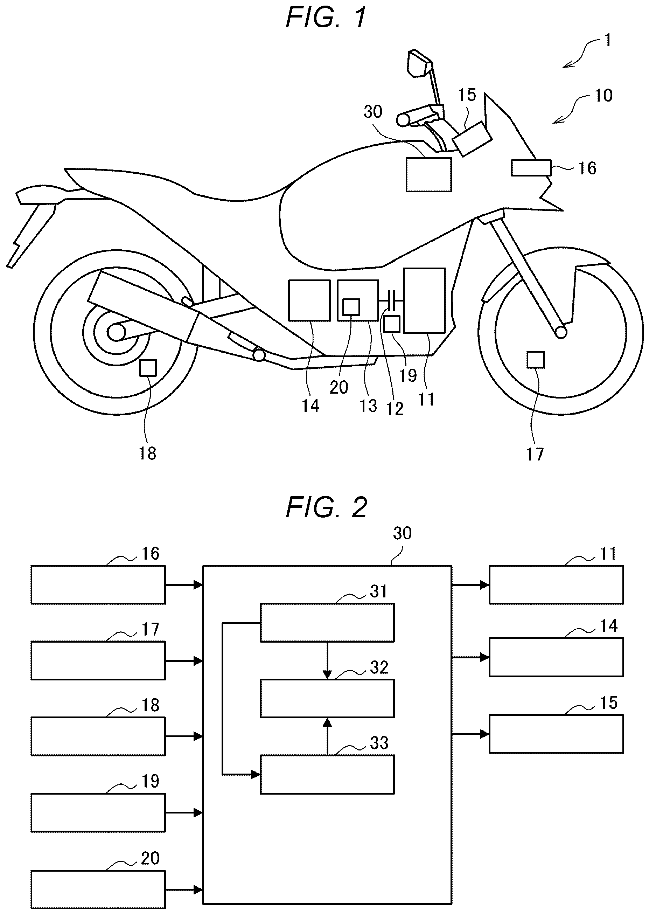

Hereinafter, a description will be made on a controller that is used for a two-wheeled motorcycle (see a straddle-type vehicle 1 in Fig. 1). However, a vehicle as a control target of the controller according to the invention may be a straddle-type vehicle other than the two-wheeled motorcycle. The straddle-type vehicle means a vehicle that a rider straddles. Examples of the straddle-type vehicle are motorcycles (a two-wheeled motor vehicle and a three-wheeled motor vehicle) and a bicycle. The motorcycles include a vehicle having an engine as a power source, a vehicle having an electric motor as the power source, and the like. Examples of the motorcycles are a motorbike, a scooter, and an electric scooter. The bicycle means a vehicle capable of traveling forward on a road by a depression force applied to pedals by a rider. Examples of the bicycle are a normal bicycle, an electrically-assisted bicycle, and an electric bicycle.

In addition, the following description will be made on a case where the engine (more specifically, an engine 11 in Fig. 1, which will be described below) is mounted as a drive source that can output power for driving a drive wheel. However, as the drive source, a drive source other than the engine (for example, the electric motor) may be mounted, or plural drive sources may be mounted.

Furthermore, the following description will be made on a case where a control unit (more specifically, a hydraulic pressure control unit 14 in Fig. 1, which will be described below) for controlling a hydraulic pressure of a brake fluid is adopted as a control unit for a braking force generated on a wheel. However, a control unit (a so-called brake-by-wire) that controls a position of a braking section itself of the wheel by an electric signal may be adopted as the control unit for the braking force generated on the wheel.

A configuration, operation, and the like, which will be described below, merely constitute one example. The controller and the control method according to the invention are not limited to a case with such a configuration, such operation, and the like.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Straddle-Type Vehicle>

A description will be made on a configuration of the straddle-type vehicle 1 according to an embodiment of the invention with reference to Fig. 1 and Fig. 2.

Fig. 1 is a schematic view illustrating an outline configuration of the straddle-type vehicle 1. The straddle-type vehicle 1 is a two-wheeled motorcycle that corresponds to an example of the straddle-type vehicle according to the invention. As illustrated in Fig. 1, the straddle-type vehicle 1 includes the engine 11, a clutch 12, a transmission 13, the hydraulic pressure control unit 14, a display device 15, a surrounding environment sensor 16, a front-wheel rotational frequency sensor 17, a rear-wheel rotational frequency sensor 18, a clutch sensor 19, a gear position sensor 20, and a controller (ECU) 30.

The straddle-type vehicle 1 includes a rider-assistance system 10 that assists a rider of the straddle-type vehicle 1. The rider-assistance system 10 includes the above components (more specifically, the engine 11, the clutch 12, the transmission 13, the hydraulic pressure control unit 14, the display device 15, the surrounding environment sensor 16, the front-wheel rotational frequency sensor 17, the rear-wheel rotational frequency sensor 18, the clutch sensor 19, the gear position sensor 20, and the controller 30).

The engine 11 corresponds to an example of a drive source for the straddle-type vehicle 1, and can output the power for driving a drive wheel (more specifically, a rear wheel). For example, the engine 11 is provided with: one or plural cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 11, and an intake air amount to the combustion chamber varies according to a throttle opening amount as an opening amount of the throttle valve.

The clutch 12 is interposed between the engine 11 and the transmission 13, and connects the engine 11 and the transmission 13. That is, the transmission 13 is connected to the engine 11 via the clutch 12. The clutch 12 allows/disallows power transmission from the engine 11 to the transmission 13. In an engaged state of the clutch 12, the power can be transmitted from the engine 11 to the transmission 13. In a disengaged state of the clutch 12, the power cannot be transmitted from the engine 11 to the transmission 13. The rider can bring the clutch 12 into the disengaged state by performing a clutch operation using a clutch operation section that is an operation section for operating the clutch 12.

The transmission 13 has plural gear stages. An input shaft of the transmission 13 is connected to the crankshaft of the engine 11 via the clutch 12. An output shaft of the transmission 13 is connected to the rear wheel as the drive wheel. Accordingly, the power that is output from the engine 11 is transmitted to the transmission 13 via the clutch 12, is shifted by the transmission 13, and is then transmitted to the rear wheel. The rider can make a shift change by performing a gear shift operation in a state where the clutch 12 is brought into the disengaged state by the clutch operation.

Hereinafter, a description will be made on an example in which the straddle-type vehicle 1 is a manual vehicle that includes the transmission 13 with the plural gear stages. However, the straddle-type vehicle 1 may be an automatic vehicle that includes an automatic transmission.

The hydraulic pressure control unit 14 is a unit that has a function to control the braking force generated on the wheel. For example, the hydraulic pressure control unit 14 includes components (for example, a control valve and a pump) that are provided on an oil channel connecting a master cylinder and a wheel cylinder and that control a brake hydraulic pressure in the wheel cylinder. The braking force generated on the wheel is controlled when operation of each of the components in the hydraulic pressure control unit 14 is controlled. The hydraulic pressure control unit 14 may control the braking force generated on each of a front wheel and the rear wheel or may only control the braking force generated on one of the front wheel and the rear wheel.

The display device 15 has a display function to visually display information. An example of the display device 15 is a liquid-crystal display. For example, the display device 15 is provided in front of a handlebar in the straddle-type vehicle 1. However, arrangement of the display device 15 to a vehicle body is not particularly limited.

The surrounding environment sensor 16 detects surrounding environment information on environment around the straddle-type vehicle 1. More specifically, the surrounding environment sensor 16 is provided to a front portion of the straddle-type vehicle 1 and detects the surrounding environment information in front of the straddle-type vehicle 1. The surrounding environment information that is detected by the surrounding environment sensor 16 is output to the controller 30.

The surrounding environment information that is detected by the surrounding environment sensor 16 may be information on a distance to or an orientation (for example, a relative position, a relative distance, a relative speed, relative acceleration, or the like) of a target object that is located around the straddle-type vehicle 1, or may be a characteristic of the target object (for example, a type of the target object, a shape of the target object itself, a mark on the target object, or the like) that is located around the straddle-type vehicle 1. Examples of the surrounding environment sensor 16 are a radar, a Lidar sensor, an ultrasonic sensor, and a camera.

The surrounding environment information can also be detected by a surrounding environment sensor that is mounted to another vehicle or by an infrastructure facility. That is, the controller 30 can also acquire the surrounding environment information via wireless communication with the other vehicle or the infrastructure facility.

The front-wheel rotational frequency sensor 17 is a wheel rotational frequency sensor that detects a rotational frequency of the front wheel (for example, a rotational frequency of the front wheel per unit time [rpm], a travel distance of the front wheel per unit time [km/h], or the like), and outputs a detection result. The front-wheel rotational frequency sensor 17 may detect another physical quantity that can substantially be converted to the rotational frequency of the front wheel. The front-wheel rotational frequency sensor 17 is provided to the front wheel.

The rear-wheel rotational frequency sensor 18 is a wheel rotational frequency sensor that detects a rotational frequency of the rear wheel (for example, the rotational frequency of the rear wheel per unit time [rpm], a travel distance of the rear wheel per unit time [km/h], or the like), and outputs a detection result. The rear-wheel rotational frequency sensor 18 may detect another physical quantity that can substantially be converted to the rotational frequency of the rear wheel. The rear-wheel rotational frequency sensor 18 is provided to the rear wheel.

The clutch sensor 19 detects an engagement state of the clutch 12, and outputs a detection result. Examples of the engagement state of the clutch 12 are the engaged state where the clutch 12 is engaged and the disengaged state where the clutch 12 is disengaged. The clutch sensor 19 is provided to the clutch 12, for example.

The gear position sensor 20 detects at which gear stage the gear stage of the transmission 13 is set, and outputs a detection result. The gear position sensor 20 is provided to the transmission 13, for example.

The controller 30 controls operation of the rider-assistance system 10. For example, a part or a whole of the controller 30 is a microcomputer, a microprocessor unit, or the like. Alternatively, the controller 30 may partially or entirely be one whose firmware and the like can be updated, or may partially or entirely be a program module or the like that is executed by a command from a CPU or the like, for example. The controller 30 may be provided as one unit or may be divided into plural units, for example.

As illustrated in Fig. 2, the controller 30 includes an acquisition section 31, an execution section 32, and a determination section 33, for example. The controller 30 communicates with each of the devices (for example, the engine 11, the hydraulic pressure control unit 14, the display device 15, the surrounding environment sensor 16, the front-wheel rotational frequency sensor 17, the rear-wheel rotational frequency sensor 18, the clutch sensor 19, and the gear position sensor 20) in the rider-assistance system 10. The controller 30 can control operation of each of the devices (for example, the engine 11, the hydraulic pressure control unit 14, and the display device 15) in the rider-assistance system 10.

The acquisition section 31 acquires information from each of the devices in the rider-assistance system 10, and outputs the acquired information to the execution section 32 and the determination section 33. For example, the acquisition section 31 acquires information from the surrounding environment sensor 16, the front-wheel rotational frequency sensor 17, the rear-wheel rotational frequency sensor 18, the clutch sensor 19, and the gear position sensor 20. In the present specification, the acquisition of the information can include extraction, generation (for example, calculation), and the like of the information.

The execution section 32 executes rider-assistance operation. The rider-assistance operation is operation to assist the rider, and can include various types of operation. In particular, the execution section 32 executes setting change notification operation that is the rider-assistance operation to make a notification that suggests the rider to change setting information on the straddle-type vehicle 1. The execution section 32 executes the setting change notification operation by controlling the operation of the display device 15, for example. In this embodiment, as will be described below, operability of the straddle-type vehicle 1 is improved by executing the setting change notification operation at appropriate timing.

The determination section 33 makes various determinations. A determination result by the determination section 33 is used for processing that is executed by the execution section 32.

### <Operation of Controller>

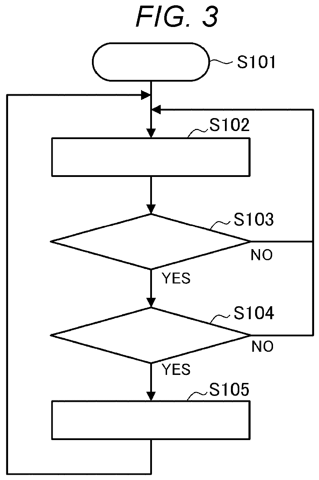

A description will be made on operation of the controller 30 according to the embodiment of the invention with reference to Fig. 3 to Fig. 5.

As described above, the execution section 32 of the controller 30 executes the setting change notification operation that is the rider-assistance operation to make the notification that suggests the rider to change the setting information on the straddle-type vehicle 1. The setting information on the straddle-type vehicle 1 includes various types of information on settings of the straddle-type vehicle 1, and includes a travel mode of the straddle-type vehicle 1, for example. Hereinafter, a description will be made on an example in which the rider is suggested to change the travel mode of the straddle-type vehicle 1 in the setting change notification operation. However, as will be described below, the setting change notification operation is not limited to such an example.

Hereinafter, a description will sequentially be made on first processing, second processing, and third processing as processing examples related to the setting change notification operation.

Fig. 3 is a flowchart illustrating an example of a first processing procedure that is executed by the controller 30. Step S101 in Fig. 3 corresponds to initiation of a control flow illustrated in Fig. 3.

When the control flow illustrated in Fig. 3 is initiated, in step S102, the acquisition section 31 acquires weather information. The weather information includes various types of information on weather, and can include information indicating that the current weather is sunny, rain, or snow, for example.

For example, in the case where the camera is used as the surrounding environment sensor 16, the acquisition section 31 can acquire the weather information by subjecting an image captured by the camera to image recognition processing. For example, the acquisition section 31 can determine whether the current weather is sunny, rainy, or snowy by executing processing to estimate the current weather from color information of a road surface in the image captured by the camera. In this case, the weather information is acquired on the basis of road surface information. The road surface information can include various types of information on the road surface. The acquisition section 31 may acquire the weather information on the basis of sky color information.

The acquisition section 31 may acquire the weather information by a method other than the above method. For example, the acquisition section 31 may acquire the weather information from the infrastructure facility or the other vehicle capable of transmitting the weather information via communication.

Next, in step S103, the determination section 33 determines whether the currently set travel mode differs from the travel mode suitable for the current weather.

Here, the straddle-type vehicle 1 has plural types of the travel modes, and one type of the travel mode that is selected from the plural types of the travel modes is set for the straddle-type vehicle 1. For example, the rider can perform a setting operation to change the set travel mode by using an input device (for example, the display device 15) of the straddle-type vehicle 1. The controller 30 controls the operation of each of the devices in the straddle-type vehicle 1 according to the set travel mode. As a result, for example, a degree of intervention of anti-lock brake control is changed, or a degree of effectiveness of a suspension is changed according to the set travel mode.

For example, a travel mode suitable for the sunny weather (for example, a road mode), a travel mode suitable for the rainy or snowy weather (for example, a rain mode), and the like are prepared as the travel modes of the straddle-type vehicle 1. The determination section 33 can identify the travel mode suitable for the current weather on the basis of the weather information acquired in step S102. For example, in the case where the current weather is sunny, the determination section 33 identifies the road mode as the travel mode suitable for the current weather. In addition, for example, in the case where the current weather is rain or snow, the determination section 33 identifies the rain mode as the travel mode suitable for the current weather.

If it is determined that the currently set travel mode matches the travel mode suitable for the current weather (step S103/NO), the processing returns to step S102. For example, if the current weather is sunny and the currently set travel mode is the road mode, it is determined NO in step S103. In addition, for example, if the current weather is rain or snow and the currently set travel mode is the rain mode, it is determined NO in step S103.

On the other hand, if it is determined that the currently set travel mode differs from the travel mode suitable for the current weather (step S103/YES), the processing proceeds to step S104. For example, if the current weather is sunny and the currently set travel mode is the rain mode, it is determined YES in step S103. In addition, for example, if the current weather is rain or snow and the currently set travel mode is the road mode, it is determined YES in step S103.

The prepared travel modes are not limited to the above examples. For example, a type other than the above types of the travel modes may be prepared separately, or the travel mode suitable for the weather other than sunny, rain, and snow may be prepared.

If it is determined YES in step S103, in step S104, the determination section 33 determines presence or absence of a stop or a possible stop of the straddle-type vehicle 1.

The presence of the stop of the straddle-type vehicle 1 means that the actual stop of the straddle-type vehicle 1 can be determined. The presence of the possible stop of the straddle-type vehicle 1 means that the stop of the straddle-type vehicle 1 in the near future can be expected. That is, in the determination in step S104, it is determined not only whether the straddle-type vehicle 1 is actually stopped but also whether the straddle-type vehicle 1 is going to be stopped in the near future. The stop of the straddle-type vehicle 1 means that the straddle-type vehicle 1 is stopped in a state capable of being restarted immediately.

For example, the determination section 33 may determine the presence or the absence of the stop or the possible stop of the straddle-type vehicle 1 on the basis of traffic light information. The traffic light information is information on a traffic light and includes information on whether the traffic light is a red light, for example. For example, in the case where the traffic light information is the information indicating that the traffic light is the red light, the determination section 33 determines the presence of the stop or the possible stop of the straddle-type vehicle 1.

For example, in the case where the camera is used as the surrounding environment sensor 16, the acquisition section 31 can acquire the traffic light information by subjecting the image captured by the camera to the image recognition processing. The acquisition section 31 may acquire the traffic light information by a method other than the above method. For example, the acquisition section 31 may acquire the traffic light information from the infrastructure facility or the other vehicle capable of transmitting the traffic light information via the communication.

Alternatively, for example, the determination section 33 may determine the presence or the absence of the stop or the possible stop of the straddle-type vehicle 1 on the basis of vehicle speed information of the straddle-type vehicle 1. The vehicle speed information is information on a vehicle speed of the straddle-type vehicle 1 or information that can substantially be converted to the vehicle speed of the straddle-type vehicle 1. For example, in the case where the vehicle speed of the straddle-type vehicle 1 is lower than a reference vehicle speed, the determination section 33 determines the presence of the stop or the possible stop of the straddle-type vehicle 1. The reference vehicle speed is set to a value near zero, for example. For example, the acquisition section 31 can acquire the vehicle speed information on the basis of the detection result by the front-wheel rotational frequency sensor 17 and the detection result by the rear-wheel rotational frequency sensor 18.

Alternatively, for example, the determination section 33 may determine the presence or the absence of the stop or the possible stop of the straddle-type vehicle 1 on the basis of gear information of the straddle-type vehicle 1. The gear information is information on the gear stage of the transmission 13 and, for example, includes information on which gear stage the gear stage of the transmission 13 is set. For example, in the case where the gear stage of the transmission 13 is neutral, the determination section 33 determines the presence of the stop or the possible stop of the straddle-type vehicle 1. For example, the acquisition section 31 can acquire the gear information on the basis of the detection result by the gear position sensor 20.

Alternatively, for example, the determination section 33 may determine the presence or the absence of the stop or the possible stop of the straddle-type vehicle 1 on the basis of clutch information of the straddle-type vehicle 1. The clutch information is information on the engagement state of the clutch 12 and, for example, includes information on whether the clutch 12 is in the engaged state or the disengaged state. For example, in the case where the clutch 12 is in the disengaged state, the determination section 33 determines the presence of the stop or the possible stop of the straddle-type vehicle 1. For example, the acquisition section 31 can acquire the clutch information on the basis of the detection result by the clutch sensor 19.

Alternatively, for example, the determination section 33 may determine the presence or the absence of the stop or the possible stop of the straddle-type vehicle 1 on the basis of execution status information of braking force keeping control. The execution status information of the braking force keeping control is information on an execution status of the braking force keeping control and includes information on whether the braking force keeping control is being executed, for example. The braking force keeping control is control for automatically braking the straddle-type vehicle 1 when the straddle-type vehicle 1 is stopped. In the braking force keeping control, the braking force generated to the straddle-type vehicle 1 is kept without relying on a brake operation by the rider. The braking force keeping control can include control referred to as hill hold control or vehicle hold control. For example, in the state where the straddle-type vehicle 1 is stopped, the execution section 32 executes the braking force keeping control with the rider's specific operation being a trigger. For example, in the case where the braking force keeping control is executed, the determination section 33 determines the presence of the stop or the possible stop of the straddle-type vehicle 1.

In the above description, the traffic light information, the vehicle speed information, the gear information, the clutch information, and the execution status information of the braking force keeping control are exemplified as the information that is used to determine the presence or the absence of the stop or the possible stop of the straddle-type vehicle 1. However, the above determination may be made by combining any parts of some pieces of the above-exemplified information. For example, in the case where the traffic light information is the information indicating that the traffic light is the red light, and the vehicle speed of the straddle-type vehicle 1 is lower than the reference vehicle speed, the determination section 33 may determine the presence of the stop or the possible stop of the straddle-type vehicle 1. Alternatively, for example, in the case where the gear stage of the transmission 13 is neutral, and the vehicle speed of the straddle-type vehicle 1 is lower than the reference vehicle speed, the determination section 33 may determine the presence of the stop or the possible stop of the straddle-type vehicle 1. The above determination may be made by using information other than the information exemplified above.

If the absence of the stop or the possible stop of the straddle-type vehicle 1 is determined (step S104/NO), the processing returns to step S102. On the other hand, if the presence of the stop or the possible stop of the straddle-type vehicle 1 is determined (step S104/YES), the processing proceeds to step S105.

If it is determined YES in step S104, in step S105, the execution section 32 executes the setting change notification operation, and then the processing returns to step S102. In the first processing illustrated in Fig. 3, the execution section 32 suggests the rider to change the travel mode of the straddle-type vehicle 1 in the setting change notification operation. More specifically, in the setting change notification operation, the execution section 32 suggests the rider to change the current travel mode to the travel mode suitable for the current weather (more specifically, the travel mode that is identified in step S103 as the travel mode suitable for the current weather). That is, in the setting change notification operation, it is suggested to change the travel mode according to the weather information.

For example, the execution section 32 can suggest the rider to change the travel mode of the straddle-type vehicle 1 by using the display device 15. In this case, for example, the suggested travel mode and an object, such as a button for accepting the change to the suggested travel mode, are displayed on the display device 15. Then, by pressing the objects, the rider can change the travel mode, which has been set in the straddle-type vehicle 1, to the suggested travel mode.

However, the setting change notification operation is not limited to the example using the display device 15. For example, the setting change notification operation may be executed by using a display device that is mounted to a worn article (for example, a helmet, gloves, or the like) by the rider. Alternatively, for example, the setting change notification operation may be executed by using sound. In this case, the setting change notification operation is executed by using a sound output device that is mounted to the straddle-type vehicle 1 or the worn article by the rider, for example.

The setting change notification operation may be terminated, for example, when a predetermined time elapses or when it is determined that the straddle-type vehicle 1 is restarted. For example, the determination section 33 can determine whether the straddle-type vehicle 1 is restarted on the basis of the vehicle speed information of the straddle-type vehicle 1.

As it has been described so far, in the first processing, in the case where the determination section 33 determines the presence of the stop or the possible stop, the execution section 32 executes the setting change notification operation. Thus, the rider can be suggested to change the setting information at timing when the straddle-type vehicle 1 is stopped. As a result, at timing when the rider can perform the setting operation, the rider can perform the setting operation in a short time. Furthermore, since it is possible to suppress unnecessary execution of the setting change notification operation at timing when it is difficult to perform the setting operation, it is possible to suppress presentation of another type of the information (for example, display of a speedometer) from being interfered with by the setting change notification operation. Therefore, it is possible to improve the operability of the straddle-type vehicle 1.

The above description has been made on the example in which the change of the travel mode according to the weather information is suggested in the setting change notification operation. However, in the setting change notification operation, the change of the travel mode according to the information other than the weather information may be suggested.

For example, in the above example, the case where the weather information is acquired on the basis of the road surface information also corresponds to the case where the change of the travel mode according to the road surface information is suggested in the setting change notification operation. Here, the road surface information can include information on whether the road surface is a paved road or an unpaved road. Thus, the determination section 33 can determine whether the currently set travel mode differs from the travel mode suitable for the road surface on the basis of such road surface information. Then, in the case where it is determined that the currently set travel mode differs from the travel mode suitable for the road surface, in the setting change notification operation, the execution section 32 may suggest the rider to change the current travel mode to the travel mode suitable for the road surface. For example, in the case where the straddle-type vehicle 1 travels on the unpaved road and the currently set travel mode is the travel mode suitable for the paved road, the setting change notification operation may be executed to suggest the change to the travel mode suitable for the unpaved road. That is, in the setting change notification operation, the change of the travel mode according to the road surface information may be suggested.

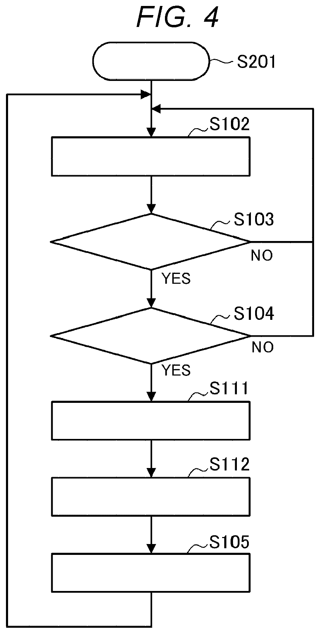

Fig. 4 is a flowchart illustrating an example of a second processing procedure that is executed by the controller 30. Step S201 in Fig. 4 corresponds to initiation of a control flow illustrated in Fig. 4.

The second processing illustrated in Fig. 4 differs from the first processing in Fig. 3 in that, if it is determined YES in step S104, step Sill and step S112 are additionally executed prior to step S105.

In the second processing illustrated in Fig. 4, if it is determined YES in step S104 (that is, if the presence of the stop or the possible stop of the straddle-type vehicle 1 is determined), in step S111, the acquisition section 31 acquires stop duration information. The stop duration information is information on an expected time during which the straddle-type vehicle 1 remains stopped (hereinafter also referred to as stop duration).

The acquisition section 31 can acquire the stop duration information, for example, on the basis of the traffic light information. For example, the acquisition section 31 acquires, as the traffic light information, information on timing at which the traffic light turns red. In addition, the acquisition section 31 acquires, as the traffic light information, information on a time during which the traffic light remains red. Furthermore, the acquisition section 31 acquires, as the traffic light information, information on timing at which the straddle-type vehicle 1 is stopped on the basis of the vehicle speed information of the straddle-type vehicle 1. In this way, the acquisition section 31 can acquire the information on the stop duration as the stop duration information on the basis of the information on the timing at which the traffic light turns red, the information on the time during which the traffic light remains red, and the information on the timing at which the straddle-type vehicle 1 is stopped.

The acquisition section 31 may acquire the stop duration information on the basis of information other than the traffic light information. For example, the acquisition section 31 may acquire the stop duration information on the basis of information on the number of vehicles that are stopped in front of the straddle-type vehicle 1. The information on the number of the vehicles that are stopped in front of the straddle-type vehicle 1 can be acquired, for example, on the basis of the surrounding environment information acquired by the surrounding environment sensor 16 or the like. For example, as the number of the vehicles that are stopped in front of the straddle-type vehicle 1 is increased, the acquisition section 31 can determine that a period from a current time point to a time point at which the traffic light is switched from red to green is shorter and the stop duration is shorter. Alternatively, for example, the acquisition section 31 may acquire the stop duration information from the infrastructure facility or the other vehicle capable of transmitting the stop duration information via the communication.

Next to step S111, in step S112, the execution section 32 determines a content of the suggestion in the setting change notification operation on the basis of the stop duration information, and the processing proceeds to step S105. That is, in step S105, by the setting change notification operation, the rider is notified of the content of the suggestion that is determined in step S112.

In step S112, as the content of the suggestion in the setting change notification operation, the execution section 32 determines the setting operation that can be performed in a shorter time as the stop duration indicated by the stop duration information is reduced (for example, in the case where the setting operation for changing the travel mode is a tapping operation on the display device 15, an operation allowing the change of the travel mode with a fewer number of taps), for example. As a result, in the case where the stop duration is short, the rider can perform the setting operation in the short time. Therefore, it is possible to further improve the operability of the straddle-type vehicle 1.

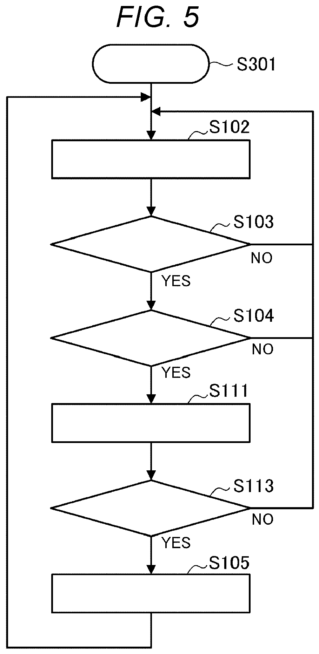

Fig. 5 is a flowchart illustrating an example of a third processing procedure that is executed by the controller 30. Step S301 in Fig. 5 corresponds to initiation of a control flow illustrated in Fig. 5.

The third processing in Fig. 5 differs from the second processing in Fig. 4 in that step S112 is replaced with step S113.

In the third processing illustrated in Fig. 5, following step S111, in step S113, the execution section 32 determines whether the stop duration is longer than reference duration. For example, the reference duration is set to such duration with which it can be determined whether the stop duration is not long enough for the rider to perform the setting operation. A case where the stop duration is shorter than the reference duration corresponds to a case where the stop duration is not long enough for the rider to perform the setting operation.

If it is determined that the stop duration is shorter than the reference duration (step S113/NO), the processing returns to step S102. That is, in this case, the setting change notification operation is not executed. On the other hand, if it is determined that the stop duration is longer than the reference duration (step S113/YES), the processing proceeds to step S105, and the setting change notification operation is executed in step S105. In this way, in the case where the stop duration is not long enough for the rider to perform the setting operation, it is possible to suppress the unnecessary execution of the setting change notification operation.

As described above, the second processing in Fig. 4 and the third processing in Fig. 5 correspond to examples of the processing in which the execution section 32 changes the setting change notification operation on the basis of the stop duration information. More specifically, the second processing in Fig. 4 corresponds to the example of the processing in which the execution section 32 changes the content of the suggestion in the setting change notification operation on the basis of the stop duration information. Meanwhile, the third processing in Fig. 5 corresponds to the example of the processing in which the execution section 32 changes whether to execute the setting change notification operation on the basis of the stop duration information.

The above description has been made on the example in which the rider is suggested to change the travel mode of the straddle-type vehicle 1 in the setting change notification operation. However, the setting information to be suggested in the setting change notification operation is not limited to the travel mode. For example, a change of setting information on a control mode that is separately set for each of the devices in the straddle-type vehicle 1 may be suggested in the setting change notification operation.

### <Effects of Controller>

A description will be made on effects of the controller 30 according to the embodiment of the invention.

The controller 30 has the execution section 32 that executes the rider-assistance operation to assist the rider, and further has the determination section 33 that determines the presence or the absence of the stop or the possible stop of the straddle-type vehicle 1. In the case where the determination section 33 determines the presence of the stop or the possible stop of the straddle-type vehicle 1, the execution section 32 executes the setting change notification operation that is the rider-assistance operation to make the notification that suggests the rider to change the setting information on the straddle-type vehicle 1. Thus, the rider can be suggested to change the setting information at the timing when the straddle-type vehicle 1 is stopped. As a result, the rider can perform the setting operation at the timing when the rider can perform the setting operation at ease. Furthermore, at the timing when it is difficult to perform the setting operation, the unnecessary execution of the setting change notification operation, which interferes with the presentation of the other type of the information, can be suppressed.

Preferably, in the controller 30, the above setting information is the travel mode of the straddle-type vehicle 1. Thus, the rider can be suggested to change the travel mode at the timing when the straddle-type vehicle 1 is stopped. As a result, at the timing when the rider can perform the travel mode setting operation, the rider can perform the travel mode setting operation in the short time. Therefore, it is possible to improve the operability in relation to the setting of the travel mode of the straddle-type vehicle 1.

Preferably, in the controller 30, the execution section 32 suggests to change the travel mode according to the weather information in the setting change notification operation. Thus, in the setting change notification operation, the rider can be suggested to change the current travel mode to the travel mode suitable for the current weather. As a result, at the timing when the rider can perform the travel mode setting operation, the rider can change the current travel mode to the travel mode suitable for the current weather in the short time. Therefore, it is possible to appropriately improve the operability in relation to the setting of the travel mode of the straddle-type vehicle 1.

Preferably, in the controller 30, the execution section 32 suggests to change the travel mode according to the road surface information in the setting change notification operation. Thus, in the setting change notification operation, the rider can be suggested to change the current travel mode to the travel mode suitable for the road surface. As a result, at the timing when the rider can perform the travel mode setting operation, the rider can change the current travel mode to the travel mode suitable for the road surface in the short time. Therefore, it is possible to appropriately improve the operability in relation to the setting of the travel mode of the straddle-type vehicle 1.

Preferably, in the controller 30, the determination section 33 determines the presence or the absence of the stop or the possible stop of the straddle-type vehicle 1 on the basis of the traffic light information. Thus, it is possible to appropriately determine the presence or the absence of the stop or the possible stop of the straddle-type vehicle 1. In particular, since the stop duration information, which is information on the expected duration during which the straddle-type vehicle 1 remains stopped, can be acquired on the basis of the traffic light information, in addition to the determination on the presence or the absence of the stop or the possible stop of the straddle-type vehicle 1, it is also possible to appropriately change the setting change notification operation on the basis of the stop duration information.

Preferably, in the controller 30, the determination section 33 determines the presence or the absence of the stop or the possible stop of the straddle-type vehicle 1 on the basis of the vehicle speed information of the straddle-type vehicle 1. Thus, it is possible to appropriately determine the presence or the absence of the stop or the possible stop of the straddle-type vehicle 1.

Preferably, in the controller 30, the determination section 33 determines the presence or the absence of the stop or the possible stop of the straddle-type vehicle 1 on the basis of the gear information of the straddle-type vehicle 1. Thus, it is possible to appropriately determine the presence or the absence of the stop or the possible stop of the straddle-type vehicle 1.

Preferably, in the controller 30, the determination section 33 determines the presence or the absence of the stop or the possible stop of the straddle-type vehicle 1 on the basis of the clutch information of the straddle-type vehicle 1. Thus, it is possible to appropriately determine the presence or the absence of the stop or the possible stop of the straddle-type vehicle 1.

Preferably, in the controller 30, the execution section 32 executes breaking force keeping control for keeping a breaking force generated to the straddle-type vehicle 1 without relying on the breaking operation by the rider, and the determination section 33 determines the presence or the absence of the stop or the possible stop of the straddle-type vehicle 1 on the basis of execution status information of the breaking force keeping control. Thus, it is possible to appropriately determine the presence or the absence of the stop or the possible stop of the straddle-type vehicle 1.

Preferably, the controller 30 includes the acquisition section 31 that acquires the stop duration information as the information on the expected duration during which the straddle-type vehicle 1 remains stopped, and the execution section 32 changes the setting change notification operation on the basis of the stop duration information. Thus, the setting change notification operation can be optimized on the basis of the stop duration information.

Preferably, in the controller 30, the execution section 32 changes the content of the suggestion in the setting change notification operation on the basis of the stop duration information. Thus, the content of the suggestion in the setting change notification operation can be optimized on the basis of the stop duration information. For example, when the stop duration is short, the rider can perform the setting operation in the short time. Therefore, it is possible to further improve the operability of the straddle-type vehicle 1.

Preferably, in the controller 30, the execution section 32 changes whether to execute the setting change notification operation on the basis of the stop duration information. Thus, it is possible to optimize the determination on whether to execute the setting change notification operation on the basis of the stop duration information. For example, in the case where the stop duration is not long enough for the rider to perform the setting operation, the unnecessary execution of the setting change notification operation can be suppressed.

Preferably, in the controller 30, the acquisition section 31 acquires the stop duration information on the basis of the traffic light information. Thus, the stop duration information can appropriately be acquired.

The invention is not limited to the embodiment that has been described. For example, only a part of the embodiment may be implemented.

## Claims

1. A controller (30) for a rider-assistance system (10) that assists a rider of a straddle-type vehicle (1), the controller comprising:
an execution section (32) that executes rider-assistance operation to assist the rider, and further comprising:
a determination section (33) that determines presence or absence of a stop or a possible stop of the straddle-type vehicle (1), wherein
in the case where the determination section (33) determines that the straddle-type vehicle (1) is stopped or expected to stop, the execution section (32) executes setting change notification operation that is the rider-assistance operation to make a notification that suggests the rider to change setting information on the straddle-type vehicle (1).

2. The controller according to claim 1, wherein
the setting information is a travel mode of the straddle-type vehicle (1).

3. The controller according to claim 2, wherein
the execution section (32) suggests to change the travel mode according to weather information in the setting change notification operation.

4. The controller according to claim 2, wherein
the execution section (32) suggests to change the travel mode according to road surface information in the setting change notification operation.

5. The controller according to claim 1, wherein
the determination section (33) determines the presence or the absence of the stop or the possible stop on the basis of traffic light information.

6. The controller according to claim 1, wherein
the determination section (33) determines the presence or the absence of the stop or the possible stop on the basis of vehicle speed information of the straddle-type vehicle (1) .

7. The controller according to claim 1, wherein
the determination section (33) determines the presence or the absence of the stop or the possible stop on the basis of gear information of the straddle-type vehicle (1).

8. The controller according to claim 1, wherein
the determination section (33) determines the presence or the absence of the stop or the possible stop on the basis of clutch information of the straddle-type vehicle (1).

9. The controller according to claim 1, wherein
the execution section (32) can execute braking force keeping control for keeping a braking force generated to the straddle-type vehicle (1) without relying on a brake operation by the rider, and
the determination section (33) determines the presence or the absence of the stop or the possible stop on the basis of execution status information of the braking force keeping control.

10. The controller according to any one of claims 1 to 9 further comprising:
an acquisition section (31) that acquires stop duration information as information on expected duration during which the straddle-type vehicle (1) remains stopped, wherein
the execution section (32) changes the setting change notification operation on the basis of the stop duration information.

11. The controller according to claim 10, wherein
the execution section (32) changes a content of a suggestion in the setting change notification operation on the basis of the stop duration information.

12. The controller according to claim 10, wherein
the execution section (32) changes whether to execute the setting change notification operation on the basis of the stop duration information.

13. The controller according to claim 10, wherein
the acquisition section (31) acquires the stop duration information on the basis of the traffic light information.

14. A control method for a rider-assistance system (10) that assists a rider of a straddle-type vehicle (1), the control method comprising:
executing rider-assistance operation by an execution section (32) of a controller (30) so as to assist the rider, and further comprising:
determining presence or absence of a stop or a possible stop of the straddle-type vehicle (1) by a determination section (33) of the controller (30), wherein
in the case where the determination section (33) determines that the presence of the stop or the possible stop, the execution section (32) executes setting change notification operation that is the rider-assistance operation to make a notification that suggests the rider to change setting information on the straddle-type vehicle (1).
